# EUROPÄISCHE PATENTSCHRIFT

(11) **EP 2 697 989 B1**
(45) Veröffentlichungstag und Bekanntmachung des Hinweises auf die Patenterteilung: **03.06.2015**
(21) Anmeldenummer: 12715354.2
(22) Anmeldetag: 12.04.2012
(51) Int. Cl.: H04W 12/02, H04W 8/20, H04L 29/06, H04W 4/00

(54) **Verfahren und System zur Datenübermittlung zu einem Identifizierungsmodul in einem Mobilfunkendgerät**
Method and system for data transmission to an identification module in a mobile telephone
Procédé et système pour la transmission de données à un module d'identification d'un téléphone mobile

(30) Priorität: 15.04.2011 DE 102011007534
(43) Veröffentlichungstag der Anmeldung: 19.02.2014
(73) Patentinhaber: Vodafone Holding GmbH, 40213 Düsseldorf (DE)
(72) Erfinder: NOZULAK, Thorsten, 45711 Datteln (DE); SEIFERT, Ulrich, 40468 Düsseldorf (DE); JOHNEN, Elmar, 50679 Köln (DE)
(74) Vertreter: Jostarndt, Hans-Dieter
(86) Internationale Anmeldenummer: PCT/EP2012/056608
(87) Internationale Veröffentlichungsnummer: WO 2012/140101

(56) Entgegenhaltungen:
- EP-A1- 2 106 191
- WO-A2-2008/035183
- US-A1- 2005 021 937

## Beschreibung

Die Erfindung befasst sich mit der Übertragung von Daten zu einem Identifizierungsmodul eines Mobilfunkendgeräts. Insbesondere betrifft die Erfindung ein Verfahren und ein System zum Übertragen von Daten zu einem Identifizierungsmodul in einem mit einem Mobilfunknetz verbindbaren Mobilfunkendgerät unter Einsatz eines OTA-Servers.

Mobilfunkendgeräte werden üblicherweise in Verbindung mit Identifizierungsmodulen betrieben, die Prozesse und Informationen enthalten, um einen Teilnehmer bzw. eine Subskription des Teilnehmers in einem Mobilfunknetz bei der Einbuchung in ein Mobilfunknetz zu identifizieren und authentisieren. Hierzu enthalten die Identifizierungsmodule Algorithmen und Subskriptionsdaten, die durch die Sicherheitsmerkmale des Identifizierungsmoduls vor unberechtigten Zugriffen geschützt werden. Darüber hinaus können in den Identifizierungsmodulen auch Nutzerdaten, wie etwa empfangene und gesendete Nachrichten sowie Adressbuchdaten, gespeichert werden. Aufgrund ihrer Sicherheitsmerkmale eignen sich die Identifizierungsmodule zudem für die Speicherung von sensiblen Daten des Nutzers und zur Ausführung von sensiblen Applikationen, die beispielsweise zur Durchführung von kryptografischen Prozessen oder von sicherheitskritischen Transaktionen, wie beispielsweise Zahlungstransaktionen eingesetzt werden können.

Üblicherweise sind die Identifizierungsmodule als Chipkarten ausgestaltet, die lösbar in Mobilfunkendgeräte eingesetzt werden. Beispiele für solche Identifizierungsmodule sind SIM (Subsriber Identity Module) und USIM (Universal Subscriber Identity Module) -Karten, die in GSM (Global System for Mobile Communications) und UMTS (Universal Mobile Telecommunications System)-Systemen insbesondere für die Teilnehmeridentifizierung und -authentisierung verwendet werden.

Viele Identifizierungsmodule unterstützen einen Fernzugriff insbesondere über das Mobilfunknetz, mit dem Anpassungen von Identifizierungsmodulen vorgenommen oder Funktionen der Identifizierungsmodule gesteuert werden können, ohne die Identifizierungsmodule zu einer Servicestelle transportieren oder gar ersetzen zu müssen. Anpassungen können beispielsweise die Speicherung oder Manipulation von Daten und die Installation von Anwendungen in dem Identifizierungsmodul umfassen. Um solche Fernzugriffe sicher durchführen zu können, steht der so genannte OTA (Over the Air)-Mechanismus zur Verfügung, der vom ETSI (European Telecommunications Standard Institute) bzw. dem 3GPP (3rd Generation Partnership Project) in verschiedenen Versionen in den Standarddokumenten GSM 03.48, TS 23.048 sowie TS 102 225, TS 102 226, TS 31.114 und TS 31.115 spezifiziert wurde. Implementierungen des OTA-Mechanismus sehen üblicherweise vor, dass ein OTA-Server Informationen an die Identifizierungsmodule sendet, welche mit geheimen kryptografischen Schlüsseln verschlüsselt sind, die den Identifizierungsmodulen eindeutig zugeordnet und in einer Datenbank des OTA-Servers hinterlegt sind. Durch die Verschlüsselung wird sichergestellt, dass Femzugriffe nicht durch unberechtigte Dritte vorgenommen werden können, und dass Informationen, die an ein bestimmtes Identifizierungsmoduls adressiert sind, vor unberechtigten Zugriffen auf dem Übertragungsweg geschützt sind.

Die Informationen werden von einem OTA-Server in der Regel in sogenannten OTA-Nachrichten an die Identifizierungsmodule gesendet, die oftmals mittels des SMS (Short Message Service) übertragen werden. Hierzu ist der OTA-Server über eine Schnittstelle an ein SMSC (Short Message Service Center) angebunden, über das die OTA-Nachrichten abgesendet werden. Die OTA-Nachrichten werden in dem Mobilfunkendgerät empfangen, in dem sich das adressierte Identifizierungsmodul befindet und innerhalb des Mobilfunkendgeräts an das Identifizierungsmodul übergeben. Dies geschieht in der Regel transparent, d.h. unsichtbar für den Bediener des Mobilfunkendgeräts.

Bei dieser Ausgestaltung des OTA-Mechanismus besteht jedoch das Problem, dass die mittels des SMS übertragbaren OTA-Nachrichten in ihrer Größe beschränkt sind. So haben SMS-Nachrichten bei Verwendung der verbreiteten 7-bit-Kodierung einen maximalen Dateninhalt von 160 Zeichen. OTA-Informationen, deren Datenvolumen den maximalen Umfang einer SMS-Nachricht übersteigt, können grundsätzlich ebenfalls übertragen werden, indem sie auf mehrere OTA-Nachrichten verteilt werden, aus denen das Identifizierungsmodul die Informationen wieder zusammensetzt (so genannte verkettete oder "concatenated" SMS-Nachrichten). Es hat sich jedoch gezeigt, dass es hierbei insbesondere aufgrund fehlerhafter Wiederherstellung der Gesamtinformationen aus den in den verschiedenen Nachrichten enthaltenen Einzelinformationen häufig zu Übermittlungsfehlern kommt.

Die US 2005/0021937 A1 offenbart ein System, das ein erstes Kommunikationsgerät und ein zweites Kommunikationsgerät aufweist. Das erste Kommunikationsgerät ist so eingerichtet, dass es eine Nachricht mit dem zweiten Kommunikations gerät mittels eines Netzwerks unter Verwendung eines ersten Kommunikationsprotokolls austauschen kann. Diese Nachricht ist dabei an ein zweites Kommunikationsprotokoll angepasst, und das zweite Kommunikationsgerät ist so eingerichtet das es die Nachricht mittels des zweiten Kommunikationsprotokolls an ein drittes Kommunikationsgerät übermittel kann, welches dieses zweite Kommunikationsprotokoll verstehen kann.

WO 2008/035183 A2 offenbart eine Methode und ein System, um Daten von einem Server zu mindestens einer Mobilstation zu übertragen. Der Server sendet zu diesem Zweck eine Benachrichtigung zur Mobilstation, die die Mobilstation darüber informiert, dass Daten vorliegen, die zur Mobilstation übertragen werden können. Die Mobilstation sendet daraufhin eine Anfrage an den Server, um die Daten vom Server an die Mobilstation zu übertragen. Der Server sendet als Reaktion auf die Anfrage die zu übertragenden Daten.

Die EP 2 106 191 A1 offenbart ein Verfahren zur Aktualisierung einer Smartcard und eine dementsprechende Smartcard.

Es ist daher eine Aufgabe der vorliegenden Erfindung, eine zuverlässigere Übertragung von OTA-Informationen mit einem hohen Datenvolumen zu einem Identifizierungsmodul zu ermöglichen.

Die Aufgabe wird gelöst durch ein Verfahren mit den Merkmalen des Anspruch 1 und durch ein System mit den Merkmalen des Anspruchs 12. Ausgestaltungen des Verfahrens und des Systems sind in den abhängigen Ansprüchen angegeben.

Gemäß einem ersten Aspekt der Erfindung wird ein Verfahren zum Übertragen von Daten zu einem Identifizierungsmodul in einem mit einem Mobilfunknetz verbindbaren Mobilfunkendgerät unter Einsatz eines OTA-Servers vorgeschlagen. Der OTA-Server verfügt über eine Datenbank mit Sicherungsinformationen für eine Mehrzahl von Identifizierungsmodulen und über eine erste Schnittstelle zur Übermittlung von gesicherten Informationen, insbesondere OTA-Nachrichten, an die Identifizierungsmodule. Bei dem Verfahren werden die Daten in dem OTA-Server mittels einer in der Datenbank gespeicherten Sicherungsinformation gesichert, und die gesicherten Daten werden über eine zweite Schnittstelle des OTA-Servers an eine mit dem OTA-Server verbundene Datenzentrale übergeben. Von der Datenzentrale werden die Daten an das Identifizierungsmodul übertragen.

Gemäß einem weiteren Aspekt schlägt die Erfindung ein System zum Übertragen von Daten zu einem Identifizierungsmodul in einem mit einem Mobilfunknetz verbindbaren Mobilfunkendgerät vor. Das System umfasst einen OTA-Server, der über eine Datenbank mit Sicherungsinformationen für eine Mehrzahl von Identifizierungsmodulen und über eine erste Schnittstelle zur Übermittlung von gesicherten Informationen, insbesondere OTA-Nachrichten, an die Identifizierungsmodule verfügt. Weiterhin umfasst das System eine Datenzentrale, welche die Daten für die Übertragung zu dem Identifizierungsmodul bereitstellt. Der OTA-Server ist dazu ausgestaltet, die Daten zu sichern und über eine zweite Schnittstelle des OTA-Servers zur Bereitstellung für die Übertragung an die Datenzentrale zu übergeben.

Die an das Identifizierungsmodul zu übertragenden Daten werden über die zweite Schnittstelle von der Datenzentrale an den OTA-Server zur Sicherung übergeben. Die Datenzentrale greift zur Sicherung der Daten auf den OTA-Server zurück. Darüber hinaus werden die Daten in der Datenzentrale sowohl vor der Sicherung bereitgestellt als auch für die Übertragung zu dem Identifizierungsmodul verfügbar gemacht.

Die Daten werden bei dem Verfahren und in dem System zwar in dem OTA-Server gesichert, jedoch nicht von dem OTA-Server an das Identifizierungsmodul übertragen, sondern von einer Datenzentrale, die andere Datenübertragungskanäle nutzen kann als der OTA-Server. Insbesondere ist die Datenzentrale nicht auf die Übermittlung von Nachrichten mit einem beschränkten Datenvolumen eingeschränkt. Hierdurch können zuverlässig auch große Datenvolumina an Identifizierungsmodule übertragen werden. Die Absicherung vor unberechtigten Zugriffen ist dadurch gewährleistet, dass der OTA-Server zur Sicherung der zu übertragenden Daten verwendet wird. Dabei verlassen die Sicherungsmerkmale nicht den OTA-Server, wodurch missbräuchliche Zugriffe auf die Sicherungsmerkmale verhindert werden können.

Die an das Identifizierungsmodul übertragenen Daten können insbesondere Parameter, Programme oder andere in dem Identifizierungsmodul zu installierende Informationen und/oder Steuerbefehle zur Ausführung in dem Identifizierungsmodul umfassen. Bei den Sicherungsinformationen, die in der Datenbank des OTA-Servers für eine Mehrzahl von Identifizierungsmodulen gespeichert sind und zur Sicherung von an die Identifizierungsmodule zu übertragenden Daten verwendet werden, handelt es sich vorzugsweise um kryptographische Schlüssel. Eine Sicherung der Daten erfolgt vorzugsweise durch eine zumindest teilweise Verschlüsselung mit einem kryptographischen Schlüssel. Die kryptographischen Schlüssel können den Identifizierungsmodulen jeweils eindeutig zugeordnet sein.

Eine verbundene Ausgestaltung des Verfahrens und des Systems sieht vor, dass die Datenzentrale zur Vorgabe der zu verwendenden Sicherungsinformationen eine dem Identifizierungsmodul zugeordnete Kennung an den OTA-Server übergibt, wobei die Sicherungsinformation unter Angabe der Kennung in der Datenbank gespeichert ist. Die Kennung kann über die zweite Schnittstelle zusammen mit den zu sichernden Daten von der Datenzentrale an den OTA-Server übergeben werden. Bei der Kennung kann es sich insbesondere um eine als MSISDN (Mobile Subscriber Integrated Services Digital Network Number) ausgestaltete, dem Identifizierungsmodul zugeordnete Rufnummer handeln. Diese wird von dem OTA-Server in der Regel auch zur Adressierung von OTA-Nachrichten herangezogen und ist daher zusammen mit der Sicherungsinformation des Identifizierungsmoduls in der Datenbank des OTA-Servers hinterlegt. Alternativ oder zusätzlich können auch andere dem Nutzer zugeordnete Kennungen verwendet werden.

Die Übertragung der Daten an das Identifizierungsmodul wird in einer Weiterbildung des Verfahrens und des Systems dadurch bewirkt, dass die Daten mittels des Mobilfunkendgeräts von der Datenzentrale abgerufen werden. Das Abrufen der Daten von der Datenzentrale mittels des Mobilfunkendgeräts wird in einer Ausgestaltung des Verfahrens und des Systems von dem Identifizierungsmodul gesteuert. Ein Vorteil des Abrufs der Daten besteht darin, dass die Übertragung von dem Mobilfunkendgerät bzw. dem enthaltenen Identifizierungsmodul initiiert wird, so dass die Übertragung zu einem Zeitpunkt erfolgt, zu dem das Mobilfunkendgerät eingeschaltet und mit einem Mobilfunknetz verbunden ist. Wiederholungen von Übertragungsversuchen aufgrund eines nicht erreichbaren Identifizierungsmoduls können auf diese Weise vermieden werden.

Eine Ausführungsform des Verfahrens und des Systems beinhaltet, dass die Daten aufgrund des Empfangs einer Nachricht in dem Mobilfunkendgerät, insbesondere in dem Identifizierungsmodul, von der Datenzentrale abgerufen werden. Anhand der Nachricht kann das Identifizierungsmodul darüber informiert werden, dass Daten zum Abruf in der Datenzentrale vorliegen. Eine Weiterbildung des Verfahrens und des Systems zeichnet sich dadurch aus, dass die Daten unter einer Adresse, insbesondere einer URL (Uniform Resource Locator), zum Abrufen bereitgestellt werden und dass die Adresse in der Nachricht enthalten ist. Unter einer solchen Adresse kann das Identifizierungsmodul die Daten unter Nutzung eines von dem Mobilfunknetz bereitgestellten Datendienstes von der Datenzentrale abrufen und herunterladen.

Eine weitere Ausgestaltung des Verfahrens und des Identifizierungsmoduls sieht vor, dass die Nachricht von dem OTA-Server gesendet wird und dass es sich um eine O-TA-Nachricht handelt. Vorteilhaft wird in dieser Ausführungsform auf den bereits etablierten, sicheren OTA-Mechanismus zurückgegriffen, um die Nachricht an das Identifizierungsmodul zu übermitteln, die das Identifizierungsmodul über das Vorliegen von Daten in der Datenzentrale informiert und dazu instruiert, die Daten abzurufen. Eine weitere Ausgestaltung des Verfahrens und des Systems zeichnet sich dadurch aus, dass die Datenzentrale den OTA-Server dazu anweist, die OTA-Nachricht an das Identifizierungsmodul zu übermitteln.

Bei dem Identifizierungsmodul handelt es sich in einer Ausgestaltung des Verfahrens und des Systems um eine abgesicherte Einrichtung in dem Mobilfunkendgerät, die Informationen und/oder Prozesse zum Identifizieren und/oder Authentisieren des Identifizierungsmoduls in dem Mobilfunknetz bereitstellt. Die Einrichtung kann als ein Chip ausgestaltet sein. Der Chip kann in einer Ausgestaltung Bestandteil einer Chipkarte sein, die in das Mobilfunkendgerät eingesetzt ist. Insbesondere kann es sich hierbei um eine SIM- oder eine USIM-Karte handeln. Gleichfalls kann jedoch auch vorgesehen sein, dass das Identifizierungsmodul als ein Softwaremodul ausgestaltet ist, welches in einem Prozessor des Mobilfunkendgeräts ausgeführt wird, der auch für andere Aufgaben zuständig ist. Insbesondere kann es sich um einen Hauptprozessor des Mobilfunkendgeräts handeln.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt
- Fig. 1: eine schematische Darstellung eines Mobilfunknetzes mit einem OTA-Server und einer Datenzentrale und eines mit dem Mobilfunknetz verbundenen Mobilfunkendgeräts und
- Fig. 2: ein schematisches Ablaufdiagramm zur Veranschaulichung der gesicherten Übertragung von Daten an ein Identifizierungsmodul des Mobilfunkendgeräts.

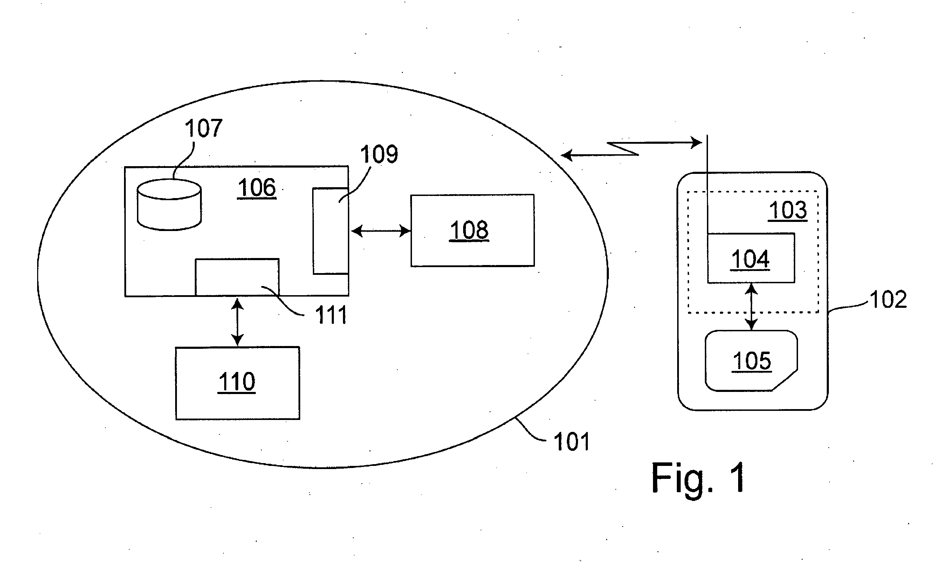

Figur 1 zeigt schematisch ein Mobilfunknetz 101, mit dem sich Mobilfunkendgeräte 102 drahtlos über ein in der Figur nicht dargestelltes Zugangsnetz verbinden können, um von dem Mobilfunknetz 101 bereitgestellte Mobilfunkdienste, wie beispielsweise Dienste zur Sprach-, Daten- und Nachrichtenübermittlung zu nutzen. Beispielhaft ist in der Figur 1 ein Mobilfunkendgerät 102 eines Mobilfunkteilnehmers dargestellt, das über ein Identifizierungsmodul 105 verfügt, zu dem Daten über das Mobilfunknetz 101 übertragen werden können.

Bei dem Mobilfunkendgerät 102 handelt es sich um ein elektronisches Kommunikationsgerät, das als mobiles oder stationäres Endgerät ausgestaltet sein kann. In einer Ausführungsform wird das Mobilfunkendgerät 102 von einem Bediener für den Zugriff auf über das Mobilfunknetz 101 bereitgestellte Dienste verwendet und stellt hierfür geeignete Bedienerschnittstellen, wie insbesondere geeignete Ein- und Ausgabemittel bereit. Beispiele für Dienste, die über das Mobilfunknetz 101 bereitgestellt werden können und zu deren Nutzung das Mobilfunkendgerät 102 verwendet werden kann, sind Dienste für Sprach- oder Videoanrufe, Datendienste bzw. Dienste für den Zugriff auf Datennetze, wie das Internet, sowie Nachrichtendienste, wie etwa SMS, MMS (Multimedia Messaging Service) oder E-Mail. In dieser Ausgestaltung kann das Mobilfunkendgerät 102 beispielsweise ein Mobiltelefon, ein Smartphon, ein Tablet- oder Notebookcomputer oder dergleichen sein. Gleichfalls kann es sich bei dem Mobilfunkendgerät 102 auch um ein M2M (Mashine to Mashine)- oder Telematikgerät handeln, welches für den automatischen Informationsaustausch mit gleichartigen Geräten und/oder Leitstellen eingerichtet ist. Ein solches Gerät kann etwa für die Fernüberwachung, - kontrolle und -wartung von Maschinen, Anlagen und anderen Systemen verwendet werden und hierzu über an den Verwendungszweck angepasste Überwachungssensoren und Steuerungsaktoren verfügen, die etwa per Mobilfunk ausgelesen und gesteuert werden können.

Das Mobilfunkendgerät 102 umfasst ein Terminal 103, das ein Funkmodul 104 aufweist, mit dem das Mobilfunkendgerät 102 über das Funkzugangsnetz mit dem Mobilfunknetz 101 verbunden werden kann. Das Funkmodul 104 verfügt hierzu über die erforderliche Funktechnik, beispielsweise eine Antenne mit zugehörigen Peripheriekomponenten, und über eine Steuereinrichtung zur Steuerung des Funkmoduls 104 und zur Durchführung der für den Datenaustausch mit dem Mobilfunknetz 101 bzw. dem Funkzugangsnetz notwendigen Datenverarbeitung. Neben dem Funkmodul 104 umfasst das Terminal 103 weitere in der Figur nicht dargestellte Komponenten, wie beispielsweise einen oder mehrere Prozessoren zur Steuerung des Terminals 103 und zur Ausführung weiterer von dem Bediener verwendeter Programme, eine oder mehrere Speichereinheiten zur Speicherung von Daten und Programmen, Ein- und Ausgabeeinrichtungen, und ggf. weitere Hard- und Softwarekomponenten zur Ausführung von dem Terminal 103 bereitgestellter Funktionen.

Das Funkmodul 104 kann mit einem Identifizierungsmodul 105 verbunden werden, welches Daten und Prozesse bereitstellt, die für den Zugriff des Mobilfunkendgeräts 102 auf das Mobilfunknetz 101 benötigt werden. Unter anderem werden von dem Identifizierungsmodule 105 bereitgestellte Daten und Prozesse für die Teilnehmeridentifizierung und -authentisierung in dem Mobilfunknetz 101 herangezogen. Die Teilnehmeridentifizierung und -authentisierung wird üblicherweise bei der Einbuchung in eine Mobilfunknetz 101 vorgenommen und umfasst die Identifizierung des Identifizierungsmoduls 105 anhand einer Kennung, die von dem Identifizierungsmodul 105 an das Mobilfunknetz 101 gesendet werden, sowie die Authentisierung des Identifizierungsmoduls anhand von Informationen, die in dem Identifizierungsmodul unter Einsatz von vorgegebenen Algorithmen und Informationen berechnet werden. Das Identifizierungsmodul 105 verfügt über eine spezielle Sicherheitsarchitektur, die einen unautorisierten Zugriff auf sicherheitsrelevante Daten und Prozesse, insbesondere auf die zuvor genannten, für den Zugriff auf das Mobilfunknetz 101 verwendeten Daten und Prozesse, verhindert.

Das Identifizierungsmodul 105 ist in einer Ausgestaltung ein gesicherter Chip, der in einer Chipkarte enthalten ist, welche lösbar in einen Kartenleser des Terminals 103 eingesteckt werden kann. In dieser Ausgestaltung, die vor allem bei Mobilfunkendgeräten 102 Anwendung findet, die als Mobiltelefone, Smartphons oder andere von einem Benutzer bediente Computereinrichtungen sind, kann es sich bei dem Identifizierungsmodul 105 um eine SIM- oder USIM-Karte handeln, die für den Zugriff auf ein Mobilfunknetz 101 verwendet wird, das als GSM-, UMTS- oder LTE (Long Term Evolution)-Netz ausgeführt ist. Gleichfalls kann das Identifizierungsmodul 105 jedoch auch ein Chip sein, der fest in das Mobilfunkendgerät 101 integriert ist. Der Chip kann insbesondere auch als SIM- oder USIM-Chip ausgestaltet sein, d.h. als ein Chip für die Teilnehmeridentifizierung und -authentisierung in Mobilfunknetzen der zuvor genannten Art. In einer weiteren Ausgestaltung kann das Identifizierungsmodul auch ein gesichertes Softwaremodul sein, das auf einem Prozessor des Terminals 103 ausgeführt wird, bei dem es sich beispielsweise um den Hauptprozessor handeln kann.

Das Identifizierungsmodul 105 ist in einem Mobilfunknetz 101 registriert, das auch als das Heimatnetz des Identifizierungsmoduls 105 bzw. des das Identifizierungsmodul 105 verwendenden Teilnehmers bezeichnet wird. Bei dem Heimatnetz kann es sich um das Mobilfunknetz 101 handeln, mit dessen Betreiber der Teilnehmer einen Mobilfunkvertrag geschlossen hat. Von dem Betreiber des Heimatnetzes oder in dessen Auftrag wird das Identifizierungsmodul 105 an den Teilnehmer ausgegeben und zuvor in einem sicheren Prozess vorkonfiguriert. Hierbei werden von dem Betreiber des Heimatnetzes vorgegebene Daten zur Identifizierung und Authentisierung des Identifizierungsmoduls 105, von dem Betreiber vorgegebene Prozesse, wie beispielsweise bei der Authentisierung eingesetzte Verschlüsselungsalgorithmen, und weitere vom Betreiber vorgegebene Daten in dem Identifizierungsmodul 105 installiert. Die Installation kann in einem einheitlichen Prozess durchgeführt werden, oder es können zunächst, beispielsweise bei der Herstellung des Identifizierungsmoduls 105, allgemeine vom Betreiber vorgegebene Daten und Prozesse installiert werden und in einem nachfolgenden Vorgang, der beispielsweise im Zusammenhang mit der Ausgabe des Identifizierungsmoduls 105 an einen Teilnehmer durchgeführt werden kann, kann eine Personalisierung erfolgen, bei der teilnehmerspezifische Daten in dem Identifizierungsmodul 105 hinterlegt werden.

Nach der Ausgabe kann per Fernzugriff auf die in dem Mobilfunknetz 101 registrierten Identifizierungsmodule 105 zugegriffen werden, um Anpassungen vorzunehmen. Beispielsweise können Daten und Prozesse bzw. Programme in dem Identifizierungsmodul 105 verändert, ergänzt oder gelöscht werden. Mittels des Fernzugriffs können derartige Anpassungen vorgenommen werden, ohne dass Identifizierungsmodule in einer Servicestelle des Mobilfunkbetreibers oder eines anderen Anbieters angepasst oder neu ausgegeben werden müssen.

Für den Fernzugriff kann ein OTA-Mechanismus eingesetzt werden, bei dem ein OTA-Server 106, Nachrichten an die in dem Mobilfunknetz 101 registrierten Identifizierungsmodule 105 sendet, die Daten zur Installation in den Identifizierungsmodul und/oder Befehle zur Änderung von Daten oder zur Ausführung von Prozesse und Programmen in dem Identifizierungsmodul enthalten sein können. Der OTA-Server 106 kann in dem Mobilfunknetz 101 angeordnet sein und beispielsweise von dem zugehörigen Mobilfunkanbieter betrieben werden, oder er kann außerhalb des Mobilfunknetzes 101 von einer vertrauenswürdigen Einrichtung betrieben werden.

Zur Sicherung des Fernzugriffs auf die Identifizierungsmodule 105 und vor allem zum Schutz vor unberechtigten Zugriffen auf die Identifizierungsmodule 105, werden kryptographische Mechanismen eingesetzt. Die von dem OTA-Server 106 gesendeten Nachrichten, die im Folgenden auch als OTA-Nachrichten bezeichnet werden, sind mit einem kryptographischen Schlüssel gesichert. Der Schlüssel ist dem adressierten Identifizierungsmodul 105 eindeutig zugeordnet und unter einer Kennung des Identifizierungsmoduls 105 in einer Datenbank 107 des OTA-Servers 106 hinterlegt ist. In dem Identifizierungsmodul 105 wird die Nachricht mit einem entsprechen kryptographischen Schlüssel geprüft, um die Authentizität der Nachricht zu prüfen.

Der in dem OTA-Server 106 zur Verschlüsselung verwendete Schlüssel und der in dem Identifizierungsmodul 105 zur Entschlüsselung verwendete Schlüssel, die nachfolgend auch als OTA-Schlüssel bezeichnet werden, können ein symmetrisches Schlüsselpaar bilden. Gleichfalls kann jedoch auch die Verwendung von asymmetrischen Schlüsselpaaren vorgesehen sein. Der in dem Identifizierungsmodul 105 verwendete OTA-Schlüssel kann bei der zuvor beschriebenen Vorkonfigurierung des Identifizierungsmoduls 105 in diesem hinterlegt werden. Die Kennung, unter der die den Identifizierungsmodulen 105 zugeordnete kryptographischen Schlüssel jeweils in der Datenbank 107 des OTA-Servers 106 hinterlegt sind, kann eine als MSISDN ausgestaltete, dem Identifizierungsmodul 105 zugeordnete Rufnummer umfassen, die auch zur Adressierung der OTA-Nachrichten an die Identifizierungsmodule 105 herangezogen werden kann. Zusätzlich oder alternativ kann die Kennung auch andere dem Identifizierungsmodul zugeordneten Identifizierungscodes umfassen. Sofern dabei die Rufnummer nicht in der Kennung enthalten ist, ist die Rufnummer vorzugsweise im OTA-Server 106 hinterlegt, und wird von dem OTA-Server 106 zur Adressierung von Nachrichten an ein Identifizierungsmodul 105 verwendet. Alternativ wird die Rufnummer in diesem Fall an den OTA-Server 106 übergeben, wenn dieser angewiesen wird, eine OTA-Nachricht an ein Identifizierungsmodul zu übergeben.

Zur Sicherung werden die in den Nachrichten enthaltenen an das Identifizierungsmodul gesendeten Daten und/oder Befehle, zumindest in dem OTA-Server 106 vorzugsweise zumindest teilweise verschlüsselt. In dem Identifizierungsmodul 105 werden die verschlüsselten Informationen zur Prüfung entschlüsselt. Durch die Verschlüsselung sind die Informationen vor unberechtigten Zugriffen auf dem Transportweg geschützt. Alternativ oder ergänzend kann vorgesehen sein, dass die Nachrichten spezielle mithilfe des in dem OTA-Server 106 hinterlegten OTA-Schlüssels erzeugte Authentisierungsmerkmale, wie etwa digitale Signaturen enthalten, die in dem Identifizierungsmodul 105 mittels des dort hinterlegten Schlüssels entschlüsselt werden.

Die OTA-Nachrichten können über einen in dem Mobilfunknetz 101 bereitgestellten Kurznachrichtendienst übermittelt werden, bei dem es sich in einer Ausgestaltung um den an sich bekannten SMS handelt. Gleichfalls kann jedoch auch ein anderer Nachrichtendienst eingesetzt werden. Bei dem SMS werden Kurznachrichten von einem SMSC 108 des Mobilfunknetzes 101 gesendet. Zur Übertragung von OTA-Nachrichten besitzt der OTA-Server 106 eine SMS-Schnittstelle 109, über die er mit dem SMSC 108 verbunden ist. Um eine OTA-Nachricht an ein Identifizierungsmodul 105 zu übertragen, übergibt der OTA-Server 106 über die SMS-Schnittstelle 109 den gesicherten Inhalt der OTA-Nachricht zusammen mit der dem Identifizierungsmodul 105 zugeordneten Kennung. Der SMSC 108 sendet daraufhin eine als SMS-Nachricht ausgestaltete OTA-Nachricht unter Verwendung der dem Identifizierungsmodul zugeordneten und ggf. in der Kennung enthaltenen Rufnummer an das Mobilfunkendgerät 101. Dies geschieht grundsätzlich in der gleichen Weise wie die Übermittlung anderer SMS-Nachrichten an das Mobilfunkendgerät 101. Die OTA-Nachricht wird jedoch aufgrund eines enthaltenen besonderen Kennzeichens von dem Terminal 103 an das Identifizierungsmodul 105 weitergeleitet. Dies geschieht vorzugsweise transparent, d.h. unsichtbar für Nutzer des Mobilfunkendgeräts 102. In dem Identifizierungsmodul 105 wird die Nachricht nach dem Empfang zunächst authentisiert. Nach erfolgreicher Prüfung, die insbesondere eine Authentisierung umfasst, wird die Nachricht ausgewertet, und enthaltene Steuerbefehle werden ausgeführt.

Mit den per SMS übertragenen OTA-Nachrichten werden in dem Mobilfunknetz 101 vor allem Daten und Mitteilungen mit geringerem Datenvolumen an die in dem Mobilfunknetzt 101 registrierten Identifizierungsmodule 105 übermittelt. Das Datenvolumen überschreitet dabei vorzugsweise nicht die Größe einer SMS-Nachricht, so dass die Daten nicht auf mehrere per SMS übermittelte OTA-Nachrichten aufgeteilt werden müssen. Größere Datenvolumina werden in dem Mobilfunknetz 101 von einer Datenzentrale 110 zur Übermittlung an die in dem Mobilfunknetz 101 registrierten Identifizierungsmodule 105 bereitgestellt. Die Datenzentrale 110 kann von dem Betreiber des OTA-Servers 106 betrieben werden oder von einem weiteren Anbieter. Dabei kann die Datenzentrale 110, wie es in der Figur 1 lediglich beispielhaft dargestellt ist, in dem Netz des Mobilfunkanbieters betrieben werden, oder auch außerhalb dieses Netzes. Im Folgenden wird ein Weg zur sicheren Übertragung von Daten von der Datenzentrale 110 an ein Identifizierungsmodul 105 beschrieben:
Um die von der Datenzentrale 110 bereitgestellten Daten in sicherer Weise an das Identifizierungsmodul 105 übertragen zu können, wird auf Sicherheitsmerkmale des OTA-Mechanismus zurückgegriffen, insbesondere auf eine Sicherung mittels des in dem OTA-Server 106 gespeicherten kryptographischen OTA-Schlüssels, der dem Identifizierungsmodul 105 zugeordnet ist. Die Sicherung wird vorzugsweise in dem OTA-Server 106 vorgenommen, so dass der OTA-Schlüssel des Identifizierungsmoduls 105 den sicheren OTA-Server 106 nicht verlässt. Für den Erhalt der zu verschlüsselnden Daten und die Rückgabe der mit dem OTA-Schlüssel gesicherten Daten stellt der OTA-Server 106 eine weitere Schnittstelle 111 bereit, auf die externe Einheiten zugreifen können. An das Identifizierungsmodul 105 zu übermittelnde Daten werden von der Datenzentrale 110 über diese Schnittstelle 111 an den OTA-Server 106 übergeben. Dies geschieht zusammen mit der dem Identifizierungsmodul 105 zugeordneten Kennung. In dem OTA-Server 106 wird sodann anhand der erhaltenen Kennung der OTA-Schlüssel des Identifizierungsmoduls 105 ermittelt, und die Daten werden mit dem OTA-Schlüssel gesichert. Die gesicherten Daten werden sodann von dem OTA-Server 106 an die Datenzentrale 110 zurückgegeben und können nachfolgend von der Datenzentrale 110 an das Identifizierungsmodul 105 übertragen werden.

Für die Übermittlung der gesicherten Daten kann grundsätzlich jeder der von dem Mobilfunknetz 101 zur Verfügung gestellten Dienste zur Übertragung eines größeren Datenvolumens eingesetzt werden. Aufgrund der Sicherung der Daten mittels des OTA-Schlüssels des Identifizierungsmoduls in dem OTA-Server 106 ist ein besonders gesicherter Übertragungskanal nicht erforderlich. In einer Ausgestaltung ist vorgesehen, dass die Daten von der Datenzentrale unter einer den Daten zugeordneten Adresse, die als URL ausgestaltet sein kann, für einen Abruf durch das Identifizierungsmodul über einen von dem Mobilfunknetz bereitgestellten Datendienst verfügbar gemacht werden kann. Der Abruf, d.h. das Herunterladen der Daten auf das Identifizierungsmodul, wird vorzugsweise von einer dem Identifizierungsmodul 105 ausgeführten Applikation gesteuert. Aufgrund eines den Abruf initiierenden Befehls greift die Applikation in einer an sich bekannten Weise auf die Adresse der Daten zu und ruft die Daten von der Datenzentrale 110 ab, woraufhin die Daten an das Identifizierungsmodul 105 übertragen werden.

In dem Identifizierungsmodul werden die Daten nach erfolgreicher Prüfung mit dem in dem Identifizierungsmodul 105 enthaltenen Schlüssel des dem Identifizierungsmodul 105 zugeordneten OTA-Schlüsselpaares authentisiert. Nach erfolgreicher Authentisierung werden die Daten weiter ausgewertet. Dabei können beispielsweise in den Daten enthaltene Parameter oder Programme in dem Identifizierungsmodul 105 hinterlegt bzw. installiert und enthaltene Steuerbefehle ausgeführt werden. Wenn die Daten nicht erfolgreich geprüft werden können, beispielsweise weil die Entschlüsselung mit dem in dem Identifizierungsmodul 105 enthaltenen OTA-Schlüssel fehlschlägt, werden erhaltene Daten verworfen.

Beispiele für Datendienste, die für den Abruf der Daten von der Datenzentrale 110 verwendet werden können, sind GPRS (General Packet Radio Service), HSPA (High Speed Packet Access) oder andere Datendienste. Für die Nutzung des Datendienstes zum Abrufen der Daten kann das Identifizierungsmodul 105 auf Funktionen des Terminals 103 des Mobilfunkengeräts 102 zur Einbuchung in den Datendienst und zur Nutzung des Datendienstes zugreifen. Hierzu kann sich das Identifizierungsmodul 105 in einer Ausgestaltung so genannter proaktiver Befehle eines Card Application Toolkit (CAT), im Falle einer SIM- oder USIM-Karte insbesondere des SIM Application Toolkit oder des USIM Application Toolkit, bedienen, die einer Chipkarte den Zugriff auf Funktionen des Terminals 103 gestatten. Gleichfalls kann auch in anderer Weise, beispielsweise mittels einer geeigneten Applikation für den Zugriff, auf den Datendienst zugegriffen werden.

Der Befehl zur Initiierung des Abrufs der Daten von der Datenzentrale 110 wird in einer Ausgestaltung durch eine gesicherte OTA-Nachricht an das Identifizierungsmodul 105 übermittelt. Die OTA-Nachricht wird auf Veranlassung der Datenzentrale 110 von dem OTA-Server 106 in der zuvor beschriebenen Weise über den Kurznachrichtendienst an das Identifizierungsmodul 105 gesendet. In dem Identifizierungsmodul wird die OTA-Nachricht in herkömmlicher Weise authentisiert und nach erfolgreicher Authentisierung ausgewertet. Bei der Auswertung wird der Befehl zum Abrufen der Daten erkannt und ausgeführt. Die Adresse, unter der die Daten abzurufen sind, wird mit dem Befehl zur Initiierung des Abrufs, d.h. in dieser Ausgestaltung innerhalb der OTA-Nachricht, an das Identifizierungsmodul 105 übermittelt. Hierzu wird die Adresse von der Datenzentrale 110 an den OTA-Server 106 übergeben, wenn die Datenzentrale 110 den OTA-Server 106 anweist, die OTA-Nachricht zur Initiierung des Datenabrufs zu erzeugen und abzusenden. Zudem wird die dem Identifizierungsmodul zugeordnete Kennung mit der Anweisung zur Absendung der OTA-Nachricht von der Datenzentrale 110 an den OTA-Server 106 übergeben. Anhand der Kennung wird der OTA-Schlüssel des Identifizierungsmoduls in der Datenbank 107 des OTA-Servers 106 ermittelt, der zur Sicherung der OTA-Nachricht verwendet wird. Die Sicherung erfolgt dabei in der zuvor bereits beschrieben Weise. Zur Adressierung der OTA-Nachricht verwendet der OTA-Server 106 die ggf. in der Kennung enthaltene Rufnummer, die dem Identifizierungsmodul 105 zugeordnet ist.

Die Übermittlung des Befehls und der Adresse mittels einer OTA-Nachricht hat den Vorteil, dass ein bewährter Mechanismus zur Übertragung von Befehlen an das Identifizierungsmodul 105 verwendet werden kann, und dass der Befehl in abgesicherter Weise an das Identifizierungsmodul 105 übertragen wird. Grundsätzlich können der Befehl und die Adresse jedoch auch in anderer Weise an das Identifizierungsmodul 105 übertragen werden. Insbesondere kann auch vorgesehen sein, dass der Abruf der Daten manuell von dem Bediener des Mobilfunkendgeräts 101 gestartet werden kann, beispielsweise indem dieser die Applikation für den Abruf über ein an dem Mobilfunkendgerät 102 bereitgestelltes Menü startet. Dabei kann der Bediener auch die Adresse für den Abruf der Daten angeben, die der Betreiber des Mobilfunknetzes 101 dem Bediener zuvor in einer geeigneten Weise zur Verfügung gestellt hat.

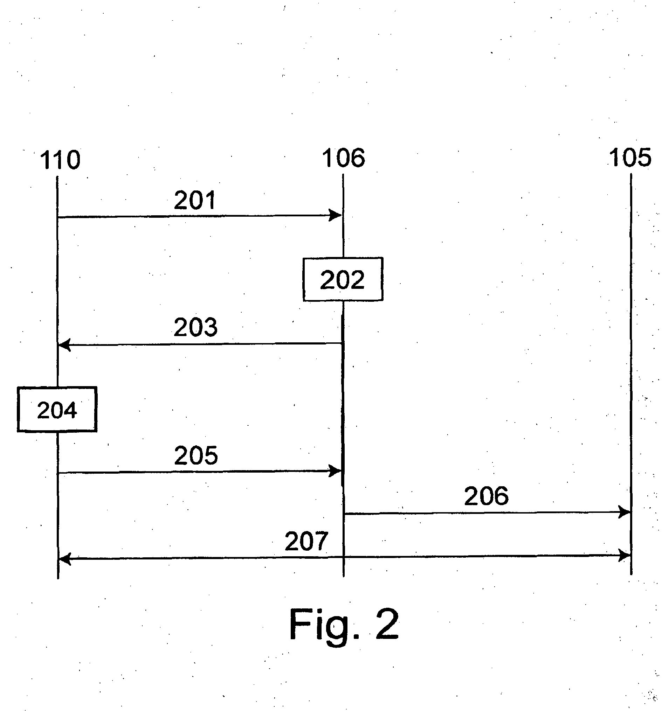

Unter Anwendung der zuvor beschriebenen Mechanismen und Einrichtungen können Daten in einer beispielhaften Ausgestaltung so an ein Identifizierungsmodul übertragen, wie im Folgenden unter Bezugnahme auf das schematische Ablaufdiagramm erläutert wird, das in der Figur 2 enthalten ist:
Zunächst werden die an das Identifizierungsmodul 105 zu übertragende Daten in der Datenzentrale 110 erzeugt bzw. aus einer externen Quelle übermittelt und in der Datenzentrale 110 bereitgestellt. Die Datenzentrale 110 überträgt die Daten dann in dem Schritt 201 über die Schnittstelle 111 an den OTA-Server 106 zusammen mit der Kennung des Identifizierungsmoduls 105. In dem Schritt 202 sichert der OTA-Server 106 die Daten sodann in einer zuvor beschriebenen Weise mittels des OTA-Schlüssels des Identifizierungsmoduls 105, der anhand der von der Datenzentrale 110 übergebenen Kennung in der Datenbank 107 des OTA-Servers 106 ermittelt wird.

Die gesicherten Daten werden dann in dem Schritt 203 von dem OTA-Server über die Schnittstelle 111 an die Datenzentrale 110 zurückgegeben. Die Datenzentrale stellt sodann die von OTA-Server 106 erhaltenen gesicherten Daten in dem Schritt 204 für den Abruf durch das Identifizierungsmodul 105 bereit. Wie zuvor beschrieben, kann die Datenzentrale 110 hierzu eine Adresse erzeugen und die Daten unter der Adresse für einen Abruf verfügbar machen. Hiernach können die Daten von dem Identifizierungsmodul 105 heruntergeladen werden.

Um den Abruf der Daten durch das Identifizierungsmodul 105 zu starten, weist die Datenzentrale 110 in der dargestellten Ausgestaltung in dem Schritt 205 den OTA-Server 106 dazu an, eine OTA-Nachricht mit einem Befehl zur Initiierung des Abrufs zu erzeugen und an das Identifizierungsmodul 105 zu senden. Die Anweisung kann über die Schnittstelle 111 an den OTA-Server 106 übergeben werden oder über eine andere Schnittstelle, die der OTA-Server 106 zu diesem Zweck bereitstellt. Zusammen mit der Anweisung wird vorzugsweise die Adresse übergeben, unter der die Daten abgerufen werden können, sowie die dem Identifizierungsmodul zugeordnete Kennung. Die Adresse wird von dem OTA-Server 106 in die OTA-Nachricht eingefügt, und die Kennung wird zur Ermittlung des zur Sicherung der OTA-Nachricht verwendeten OTA-Schlüssels des Identifizierungsmoduls 105 in der Datenbank 107 herangezogen. Die OTA-Nachricht wird dann in dem Schritt 206 von dem OTA-Server 106 an das Identifizierungsmodul 105 übermittelt. Die Übermittlung erfolgt mittels des Kurznachrichtendienstes in der zuvor beschriebenen Weise über das SMSC, das in der Figur 2 nicht dargestellt ist.

Nachdem die OTA-Nachricht in dem Identifizierungsmodul 105 empfangen und erfolgreich geprüft und insbesondere authentisiert worden ist, wird sie ausgewertet, und eine Applikation des Identifizierungsmoduls 105 steuert die Übertragung der Daten von der Datenzentrale 110 an das Identifizierungsmodul 105 in dem Schritt 207. Hierzu greift die Applikation des Identifizierungsmoduls 105 in der zuvor beschriebenen Weise über das Terminal 103 des Mobilfunkendgeräts 102 auf einen von dem Mobilfunknetz 101 bereitgestellten Datendienst zu und ruft über den Datendienst die Daten unter der in der OTA-Nachricht angegebene Adresse von der Datenzentrale 110 ab. Die abgerufenen Daten werden sodann in dem Identifizierungsmodul 105 mit dem OTA-Schlüssel des Identifizierungsmoduls 105 geprüft und nach erfolgreicher Prüfung in der vorgesehenen Weise verwendet. Dies kann beispielsweise bedeuten, dass in den Daten enthaltene Steuerbefehle in dem Identifizierungsmodul 105 ausgeführt werden und enthaltene Parameter oder Programme in dem Identifizierungsmodul 105 hinterlegt bzw. installiert werden. Wenn die heruntergeladenen Daten nicht erfolgreich authentisiert werden können, werden sie verworfen.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen. Der Schutzumfang der Erfindung wird von den Ansprüchen definiert.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichen

- 101: Mobilfunknetz
- 102: Mobilfunkendgerät
- 103: Terminal
- 104: Funkmodule
- 105: Identifizierungsmodul
- 106: OTA-Server
- 107: Datenbank
- 108: SMSC
- 109: SMS-Schnittstelle
- 110: Datenzentrale
- 111: Schnittstelle

- 201-207: Schritte

## Patentansprüche

1. Verfahren zum Übertragen von Daten zu einem Identifizierungsmodul (105) in einem mit einem Mobilfunknetz (101) verbindbaren Mobilfunkendgerät (102) unter Einsatz eines OTA-Servers (106), der über eine Datenbank (107) mit Sicherungsinformationen für eine Mehrzahl von Identifizierungsmodulen (105) und über eine erste Schnittstelle zur Übermittlung von gesicherten Informationen, insbesondere OTA-Nachrichten, an die Identifizierungsmodule (105) verfügt, wobei die Daten zur Sicherung in dem OTA-Server (106) über eine zweite Schnittstelle von einer Datenzentrale (110) an den OTA-Server (106) übergeben werden, wobei die Daten in dem OTA-Server (106) mittels einer in der Datenbank (107) gespeicherten Sicherungsinformation gesichert werden und die gesicherten Daten über die zweite Schnittstelle des OTA-Servers (106) an die mit dem OTA-Server (106) verbundene Datenzentrale (110) übergeben werden und wobei die übergebenen Daten von der Datenzentrale (110) an das Identifizierungsmodul (105) übertragen werden.

2. Verfahren nach Anspruch 1, wobei die Sicherungsinformationen kryptografische Schlüssel sind und die Daten durch zumindest teilweise Verschlüsselung mit einem kryptografischen Schlüssel gesichert werden.

3. Verfahren nach einem der vorangegangenen Ansprüche, wobei die Sicherheitsinformationen den Identifizierungsmodulen (105) eindeutig zugeordnet sind, und wobei für die Sicherung der Daten eine Sicherungsinformation verwendet wird, die von der Datenzentrale (110) vorgegeben wird.

4. Verfahren nach Anspruch 3, bei dem die Datenzentrale (110) zur Vorgabe der zu verwendenden Sicherungsinformationen eine dem Identifizierungsmodul (105) zugeordnete Kennung an den OTA-Server (106) übergibt, wobei die Sicherungsinformation unter Angabe der Kennung in der Datenbank (107) gespeichert ist.

5. Verfahren nach einem der vorangegangenen Ansprüche, wobei die gesicherten Daten mittels des Mobilfunkendgeräts (102) von der Datenzentrale (110) abgerufen werden, um sie an das Identifizierungsmodul (105) zu übertragen.

6. Verfahren nach Anspruch 5, wobei das Abrufen der gesicherten Daten von der Datenzentrale (110) mittels des Mobilfunkendgeräts (102) von dem Identifizierungsmodul (105) gesteuert wird.

7. Verfahren nach einem Ansprüche 5 oder 6, wobei die gesicherten Daten aufgrund des Empfangs einer Nachricht in dem Mobilfunkendgerät (102), insbesondere in dem Identifizierungsmodul (105), von der Datenzentrale (110) abgerufen werden.

8. Verfahren nach Anspruch 7, wobei die gesicherten Daten unter einer Adresse, insbesondere einer URL, zum Abrufen bereitgestellt werden und wobei die Adresse in der Nachricht enthalten ist.

9. Verfahren nach Anspruch 7 oder 8, wobei die Nachricht von dem OTA-Server (106) gesendet wird und es sich um eine OTA-Nachricht handelt.

10. Verfahren nach Anspruch 9, wobei die Datenzentrale (110) den OTA-Server (106) dazu anweist, die OTA-Nachricht zu übermitteln.

11. Verfahren nach einem der vorangegangen Ansprüche, wobei es sich bei dem Identifizierungsmodul (105) um eine abgesicherte Einrichtung in dem Mobilfunkendgerät (102) handelt, die Informationen und/oder Prozesse zum Identifizieren und/oder zur Authentisierung des Identifizierungsmoduls (105) in dem Mobilfunknetz (101) bereitstellt.

12. System zum Übertragen von Daten zu einem Identifizierungsmodul (105) in einem mit einem Mobilfunknetz (101) verbindbaren Mobilfunkendgerät (102), umfassend einen OTA-Server (106), der über eine Datenbank (107) mit Sicherungsinformationen für eine Mehrzahl von Identifizierungsmodulen (105) und über eine erste Schnittstelle zur Übermittlung von gesicherten Informationen, insbesondere OTA-Nachrichten, an die Identifizierungsmodule (105) verfügt, und umfassend eine Datenzentrale (110), welche die Daten für die Übertragung zu dem Identifizierungsmodul (105) über eine zweite Schnittstelle an den OTA-Server übergibt, wobei der OTA-Server (106) dazu ausgestaltet ist, die Daten zu sichern und über die zweite Schnittstelle des OTA-Servers (106) zur Bereitstellung für die Übertragung an die Datenzentrale (110) zu übergeben.

## Claims

1. A method for transmitting data to an identification module (105) in a mobile terminal device (102) that can be connected to a mobile telecommunications network (101), making use of an OTA server (106) that has a database (107) with security information for a plurality of identification modules (105) and that also has a first interface for transmitting secured information, especially OTA messages, to the identification modules (105), wherein, in order to be secured in the OTA server (106), the data is transferred by the data center (110) to the OTA server (106) via a second interface, wherein the data is secured in the OTA server (106) by means of security information stored in the database (107), and the secured data is transferred via the second interface of the OTA server (106) to a data center (110) that is connected to the OTA server (106), and wherein the transferred data is transmitted to the identification module (105) by data center (110).

2. The method according to claim 1, wherein the security information comprises cryptographic keys, and the data is secured by an at least partial encryption with a cryptographic key.

3. The method according to one of the preceding claims, wherein the security information is unambiguously associated with the identification modules (105), and wherein, in order to secure the data, security information is used that is specified by the data center (110).

4. The method according to claim 3, in which, in order to specify the security information to be used, the data center (110) transfers to the OTA server (106) an identifier associated with the identification module (105), wherein the security information is stored in the database (107) along with an indication of the identifier.

5. The method according to one of the preceding claims, wherein the secured data is retrieved from the data center (110) by means of the mobile terminal device (102) so that it can be transmitted to the identification module (105).

6. The method according to claim 5, wherein the retrieval of the secured data from the data center (110) by means of the mobile terminal device (102) is controlled by the identification module (105).

7. The method according to one of claims 5 or 6, wherein the secured data is retrieved from the data center (110) in response to a message being received in the mobile terminal device (102), especially in the identification module (105).

8. The method according to claim 7, wherein the secured data is made available for retrieval under an address, especially a URL, and wherein the address is contained in the message.

9. The method according to claim 7 or 8, wherein the message is sent by the OTA server (106) and it is an OTA message.

10. The method according to claim 9, wherein the data center (110) instructs the OTA server (106) to transmit the OTA message.

11. The method according to one of the preceding claims, wherein the identification module (105) is a secure means in the mobile terminal device (102) that provides information and/or processes for identifying and/or authenticating the identification module (105) in the mobile telecommunications network (101).

12. A system for transmitting data to an identification module (105) in a mobile terminal device (102) that can be connected to a mobile telecommunications network (101), comprising an OTA server (106) that has a database (107) with security information for a plurality of identification modules (105) and that has a first interface for transmitting secured information, especially OTA messages, to the identification modules (105), and comprising a data center (110) that transfers the data that is to be transmitted to the identification module (105) via a second interface to the OTA server, whereby the OTA server (106) is configured to secure the data and to transfer it via the second interface of the OTA server (106) so as to make it available for the transmission to the data center (110).

## Revendications

1. Procédé pour la transmission de données à un module d'identification (105) dans un terminal de téléphonie mobile (102), qui peut être connecté à un réseau radio mobile (101), avec mise en oeuvre d'un serveur OTA (106) qui dispose d'une base de données (107) contenant des informations de sécurisation pour une pluralité de modules d'identification (105) et d'une première interface pour la transmission d'informations sécurisées, en particulier de messages OTA, aux modules d'identification, les données étant, aux fins de la sécurisation dans le serveur OTA (106), transférées d'une centrale de données (110) au serveur OTA (106) via une deuxième interface, les données étant, dans le serveur OTA (106), sécurisées au moyen d'une information de sécurisation stockée dans la base de données (107) et les données sécurisées étant transférées à la centrale de données (110) reliée au serveur OTA (106) via la deuxième interface du serveur OTA (106) et les données transférées étant transmises de la centrale de données (110) au module d'identification (105).

2. Procédé selon la revendication 1, les informations de sécurisation étant des clés cryptographiques et les données étant sécurisées par cryptage au moins partiel au moyen d'une clé cryptographique.

3. Procédé selon l'une des revendications précédentes, les informations de sécurisation étant associées univoquement aux modules d'identification (105) et une information de sécurisation spécifiée par la centrale de données (110) étant utilisée pour la sécurisation des données.

4. Procédé selon la revendication 3, selon lequel la centrale de données (110), pour spécifier les informations de sécurisation à utiliser, transfère au serveur OTA (106) un identifiant associé au module d'identification (105), l'information de sécurisation étant stockée avec mention de l'identifiant dans la base de données (107).

5. Procédé selon l'une des revendications précédentes, les données sécurisées étant extraites de la centrale de données (110) au moyen du terminal de téléphonie mobile (102) pour les transmettre au module d'identification (105).

6. Procédé selon la revendication 5, l'extraction des données sécurisées de la centrale de données (110) au moyen du terminal de téléphonie mobile (102) étant commandée par le module d'identification (105).

7. Procédé selon l'une des revendications 5 ou 6, les données sécurisées étant extraites de la centrale de données (110) en raison de la réception d'un message dans le terminal de téléphonie mobile (102), et plus particulièrement dans le module d'identification (105).

8. Procédé selon la revendication 7, les données sécurisées étant mises à disposition à une adresse, et plus particulièrement une URL, pour extraction, et l'adresse étant contenue dans le message.

9. Procédé selon la revendication 7 ou 8, le message étant émis par le serveur OTA (106) et étant un message OTA.

10. Procédé selon la revendication 9, la centrale de données (110) donnant au serveur OTA (106) l'instruction de transmettre le message OTA.

11. Procédé selon l'une des revendications précédentes, le module d'identification (105) étant un dispositif sécurisé au sein du terminal de téléphonie mobile (102) et qui fournit des informations et/ou des processus pour identifier et/ou authentifier le module d'identification (105) dans le réseau radio mobile (101).

12. Système de transmission de données à un module d'identification (105) dans un terminal de téléphonie mobile (102), qui peut être connecté à un réseau radio mobile (101), comprenant un serveur OTA (106) qui dispose d'une base de données (107) contenant des informations de sécurisation pour une pluralité de modules d'identification (105) et d'une première interface pour la transmission d'informations sécurisées, en particulier de messages OTA, aux modules d'identification, et comprenant une centrale de données (110) qui transfère au serveur OTA, via une deuxième interface, les données pour la transmission au module d'identification (105), le serveur OTA (106) étant conçu pour sécuriser les données et les transférer via la deuxième interface du serveur OTA (106) pour mise à disposition pour la transmission à la centrale de données (110).
